# FASCICULE DE BREVET EUROPEEN

(11) **EP 0 856 037 B1**
(45) Date de publication et mention de la délivrance du brevet: **06.05.1999**
(21) Numéro de dépôt: 96934915.8
(22) Date de dépôt: 15.10.1996
(51) Int. Cl.: C09K 3/14, C04B 35/111

(54) **GRAINS ABRASIFS A BASE D'ALUMINE ET PROCEDE DE PREPARATION DE CES GRAINS**
SCHLEIFKÖRNER AUF BASIS VON ALUMINIUMOXID UND VERFAHREN ZU DEREN HERSTELLUNG
ALUMINA-BASED ABRASIVE GRAINS AND METHOD FOR PREPARING SAME

(30) Priorité: 16.10.1995 FR 9512316
(43) Date de publication de la demande: 05.08.1998
(73) Titulaire: PEM ABRASIFS-REFRACTAIRES, 92087 Paris La Défense (FR)
(72) Inventeur: ALARY, Jean, André, F-74190 Chedde (FR)
(74) Mandataire: Mougeot, Jean-Claude
(86) Numéro de dépôt international: FR9601609
(87) Numéro de publication internationale: WO9714759

(56) Documents cités:
- EP-A- 0 281 265
- EP-A- 0 387 748
- WO-A-94/02560
- DE-A- 3 230 227
- JP-A-58 036 923
- DATABASE WPI Week 8315 Derwent Publications Ltd., London, GB; AN 83-35476K XP002007212 & JP,A,58 036 923 (SHOWA DENKO) , 4 March 1983

## Description

### Domaine technique

L'invention concerne le domaine des grains abrasifs à base d'alumine, tels que des grains de corindon ou corindon-zircone électrofondus ou de bauxite frittée, destinés aussi bien à la fabrication de toiles et papiers abrasifs que de meules.

### Etat de la technique

La recherche de matériaux abrasifs de plus en plus performants a donné naissance, ces dernières années, à des produits haut de gamme issus des technologies céramiques les plus sophistiquées.

Ainsi les brevets EP 0168606, EP 0171034 et EP 0291029 de NORTON, EP 0200487, EP 273569, EP 0373765 et EP 0471389 de 3M, EP 0263810 et EP 0368837 de TREIBACHER CHEMISCHE WERKE décrivent l'obtention d'abrasifs en alumine frittée polycristalline. Pour la plupart d'entre eux, ils sont obtenus en combinant les avantages des méthodes de synthèse issues des techniques sol-gel, des techniques d'amorçage de cristallisation par ensemencement de fines particules de même nature que le matériau à réaliser, et de la réalisation de composites céramiques.

Les propriétés de ces matériaux sont proches de celles des céramiques microcristallines à forte teneur en alumine, généralement plus de 95% quand il ne s'agit pas de composites à dispersoides de zircone ou de nitrure de titane. Leur microdureté et leur tenacité sont supérieures à celles des produits electrofondus et leur pouvoir abrasif est nettement amélioré.

Toutefois, ces matériaux, qui utilisent des matières premières plus nobles et mettent en oeuvre des procédés de synthèse plus sophistiqués, ont des coûts de revient nettement plus élevés que ceux des produits électrofondus.

Par ailleurs, la brevet EP 0304616 de LONZA décrit des grains abrasifs à base d'alumine traités superficiellement avec une substance hygroscopique et/ou hydrophile. Le but de ce traitement est d'améliorer la capacité des grains à monter dans le champ électrostatique utilisé pour orienter les grains au moment de leur dépôt sur une toile ou un papier préencollé. L'aptitude des grains à se déplacer dans le champ électrostatique, qu'on appelle "montée dans le champ", dépend alors de la quantité d'eau absorbée, qui dépend elle-même très largement des conditions climatiques, plus précisément du taux d'humidité de l'atmosphère prévalant au moment de l'opération de dépôt sur la toile ou le papier.

La demande de brevet JP 58-036923 (Showa Denko) décrit le dépôt d'hydrate d'alumine à la surface de micro-particules de corindon, de manière à les agglomérer sous forme de particules sphériques.

Le brevet DE 3230227 (Didier Werke) décrit un mortier ou un ciment pour jointoyer des briques réfractaires, constitué d'un mélange d'hydrate d'alumine et d'un liant. Le liant peut être du silicate de sodium, un phosphate ou de l'hydrate d'alumine colloïdal. On peut ajouter au mélange une charge de chamotte ou d'une poudre minérale telle que la porcelaine, le kaolin, la bauxite calcinée ou le corindon fritté ou électrofondu.

### But de l'invention

L'invention a pour but d'obtenir, à partir de matériaux abrasifs traditionnels et de prix de revient modérés tels que le corindon brun ou blanc ou le corindon-zircone électrofondus, et la bauxite ou l'alumine frittées, des propriétés d'usage proches de celles des matériaux haut de gamme décrits ci-dessus, ainsi qu'une aptitude satisfaisante à monter dans le champ électrostatique quelles que soient les conditions climatiques du moment et du lieu dans le cas de la fabrication de toiles et papiers abrasifs.

### Objet de l'invention

L'invention repose sur trois constatations faites par la demanderesse au cours de ses recherches:
- la première est qu'une montée dans le champ électrostatique rapide et indépendante du taux d'humidité de l'atmosphère peut être obtenue en utilisant un revêtement non pas hygroscopique ou hydrophile, mais un revêtement contenant de l'eau de constitution, c'est-à-dire dans lequel les molécules d'eau font partie intégrante de la composition chimique du produit, par exemple sous forme d'hydrate, et qui soit insensible à l'eau, c'est à dire insoluble dans l'eau et inerte chimiquement vis-à-vis de l'eau, du moins dans les conditions normales.
- la seconde est que l'adhérence d'un matériau granulaire sur un support est étroitement liée à son état de surface, que le support soit organique, par exemple une résine sur une toile de papier, ou minéral, comme dans le cas d'une meule vitrifiée. Plus le matériau est rugueux, plus il offre de points d'ancrage au support auquel il est destiné. La propriété physique reliée à cette aptitude est la surface spécifique.
- la troisième est que cette adhérence dépend également de l'aptitude du matériau granulaire à réaliser une liaison chimique avec le support.

L'invention a ainsi pour objet des grains abrasifs à base d'alumine tels que des grains de corindon ou de corindon-zircone électrofondus et de bauxite ou d'alumine frittées, présentant une peau constituée essentiellement d'un mélange d'hydrate d'alumine issu d'une solution colloïdale (5 à 95% en poids) et de silicate de sodium (5 à 95% en poids). Cette peau représente 0,1 à 5% en poids du grain.

Le grain revêtu présente une surface spécifique multipliée par un facteur compris entre 5 et 100 par rapport à celle des grains non revêtus, ce facteur multiplicatif étant d'autant plus grand que la granulométrie du grain à revêtir est grossière.

L'invention a également pour objet un procédé de préparation de tels grains consistant à:
- préparer un gel constitué d'un mélange d'hydrate d'alumine colloïdal et de silicate de sodium en milieu aqueux légèrement acide,
- à enrober les grains à l'aide de ce gel en quantité comprise entre 0,1 et 5% du poids du grain,
- à sécher les grains enrobés à une température comprise entre 100 et 500°C.

L'hydrate d'alumine utilisé est de préférence le monohydrate sous forme de boehmite. La solution acide utilisée pour la préparation du gel est, de préférence, une solution contenant de 0,5 à 30% en poids d'acide nitrique, acétique ou perchlorique.

### Description de l'invention

Le procédé selon l'invention consiste d'abord à préparer un mélange d'une solution commerciale de silicate de sodium avec une solution colloïdale d'hydrate d'alumine dispersible dans une solution aqueuse faiblement acide. L'hydrate d'alumine est de préférence un monohydrate sous la forme cristallographique de boehmite. L'acide doit être en mesure de peptiser l'hydrate d'alumine; c'est le cas, en particulier, pour les acides acétique, perchlorique et nitrique. La concentration de la solution aqueuse d'acide doit rester faible, entre 0,5 et 30% en poids, et, de préférence, entre 1,5 et 5%.

Après agitation pendant quelques minutes, la solution colloïdale d'alumine se stabilise et peut être mélangée à la solution de silicate pour obtenir le gel d'enrobage des grains.

L'enrobage se fait dans un mélangeur de poudres minérales, par exemple un tambour rotatif du type de ceux utilisés pour la préparation du béton. On procède ensuite au séchage, qui peut se faire en continu sur un tapis roulant à la sortie du mélangeur.

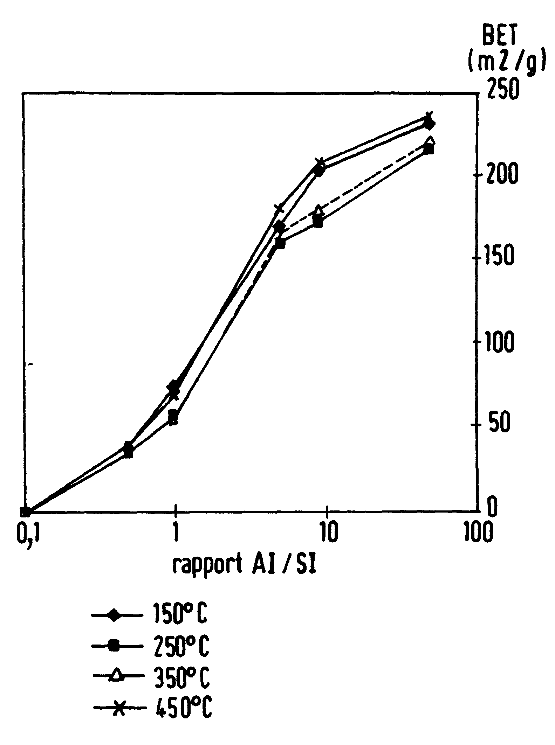

La surface spécifique du grain enrobé dépend d'une part de la composition du mélange silicate-alumine et d'autre part de la température de séchage. On a représenté à la figure 1, pour des températures de séchage comprises entre 150 et 450°C pendant 30 mn, l'évolution de la surface spécifique BET du gel en fonction de sa composition, représentée par le rapport Al/Si.

On constate qu'avec une solution contenant de l'ordre de 10% de silicate et de 90% d'hydrate d'alumine, il est possible, même à une température de séchage de 150°C, d'obtenir des surfaces spécifiques élevées, supérieures à 200 m²/g. Ce résultat est intéressant, car l'utilisation d'une température de séchage faible permet d'économiser l'énergie et réduire le coût de fabrication. On peut d'autre part ajuster la composition du mélange en fonction des propriétés recherchées dans l'application visée.

Dans tous les cas, on obtient, par le procédé selon l'invention, une augmentation d'au moins 5 fois de la surface spécifique par rapport aux grains non enrobés, et, dans de nombreux cas, de plus de 50 fois.

Les grains abrasifs selon l'invention peuvent être utilisés pour la fabrication de toiles ou papiers abrasifs. Ils sont alors déposés sur le support préencollé à l'aide du champ électrostatique généré par deux plaques conductrices entre lesquelles est appliquée une tension électrique élevée, de l'ordre de 40 kV. Les grains abrasifs montent vers l'une des plaques électriques en rencontrant sur leur chemin le support préencollé qu'on y a placé. La surface spécifique élevée des grains selon l'invention, permettant vraisemblablement l'accrochage d'un plus grand nombre de charges électrostatiques par un effet analogue à l'effet de pointes, conduit à une montée dans le champ plus rapide, en particulier lorsque le taux d'humidité relative de l'atmosphère devient trop faible (par exemple < 30%) ou que les grains sont trop gros ou trop petits. On obtient par ailleurs une bonne résistance à l'arrachement des grains, du fait que leur peau a une grande surface spécifique et, dans le cas de l'hydrate d'alumine, qu'elle est de même nature chimique que le reste du grain.

Les grains selon l'invention peuvent également servir à la fabrication de meules abrasives par incorporation dans une résine. Ces meules présentent, en particulier à chaud, des propriétés mécaniques et abrasives nettement améliorées par rapport aux meules réalisées à partir de grains non enrobés, ce qui les rend particulièrement aptes à des applications telles que le décriquage des aciers en sidérurgie.

### Exemples

On a approvisionné une solution A de silicate de sodium à 28,1% de silice, commercialisée par RHONE-POULENC sous la référence "Silicate de sodium liquide 16N34".

On a préparé d'autre part une solution B par dispersion, dans une solution dans l'eau de 2% en poids d'acide nitrique PROLABO "Rectapur" de densité 1,40, de monohydrate d'alumine dispersible DISPERAL commercialisée par la société CONDEA CHIMIE. On obtient ainsi, après agitation d'une dizaine de minutes, une solution colloïdale d'alumine à 30% en poids, dont la stabilité à température ambiante est au moins de 8 h.

### Exemple 1

On a préparé un mélange C par addition de 18% (en poids) de solution A à 82% de solution B.

On a traité avec ce mélange C des grains de corindon brun SE154 de PECHINEY ELECTROMETALLURGIE de granulométrie moyenne P50, P100 et P800 selon la nomenclature de la Fédération Européenne des producteurs d'abrasifs (FEPA), et des grains de corindon blanc de granulométrie moyenne P80, en utilisant une quantité de 10 kg par tonne de grains abrasifs. L'enrobage a été effectué dans un appareil du type bétonnière pendant une durée de 20 mn, et le séchage à 150°C dans un séchoir continu à tapis réglé à un débit de 500 kg/h. On a comparé les surfaces spécifiques BET en m²/g des grains non traités et traités. Les résultats sont les suivants:

| grains | non traités | traités |
|---|---|---|
| corindon brun P50 | < 0,03 | 2,30 |
| P100 | < 0,03 | 1,60 |
| P800 | 0,60 | 2,92 |
| corindon blanc P80 | < 0,03 | 1,70 |

On constate que la surface spécifique est multipliée par 5 pour la plus petite granulométrie et par plus de 50 dans les autres cas.

Pour caractériser l'aptitude à monter dans le champ électrostatique lors de la fabrication de toiles et papiers abrasifs, on a mesuré le temps nécéssaire pour déplacer 2,5 g de grains abrasifs dans un champ électrostatique obtenu par l'application d'une tension électrique de 40kV entre 2 électrodes distantes de 10 cm l'une de l'autre et placées dans une enceinte à hygrométrie contrôlée, respectivement à 20% et 60% d'humidité relative.

Les résultats sont les suivants:

| montée dans le champ à: 20% HR | | | 60% HR | |
|---|---|---|---|---|
| | Traités | Non traités | Traités | Non traités |
| P50 | 6,7 s | 11,5 s | 6,2 s | 10,5 s |
| P100 | 3,7 s | 9,1 s | 3,9 s | 6,7 s |
| P800 | 9,8 s | impossible | 10,2 s | impossible |
| P80 | 4,2 s | 13,1 s | 3,4 s | 3,9 s |

Il apparaît clairement que l'augmentation de la surface spécifique des grains traités selon l'invention améliore nettement leur aptitude à monter dans le champ électrostatique, et que cette amélioration devient pratiquement indépendante du taux d'humidité de l'atmosphère.

### Exemple 2

On a préparé un mélange C par addition de 2,4 kg (soit 30%) de solution A et 5,6 kg (soit 70%) de solution B. Ces 8 kg de mélange C ont été mélangés à 1 t de grains de bauxite frittée SO 200 G 20 de PECHINEY ELECTROMETALLURGIE, de diamètre compris entre 0,9 et 1,1 mm et de longueur telle que 85% des grains ont un rapport longueur sur diamètre compris entre 2,5 et 1.

Après agitation de 20 mn, les grains enrobés sont séchés à la température de 250°C par passage dans un séchoir à tapis réglé à un débit de 500 kg/h.

On a réalisé 2 séries de meules résinoïdes de 610 mm de diamètre et pesant 63 kg, chargées l'une avec 50% en poids de grains non traités, l'autre avec la même proportion de grains traités.

Pour évaluer leur résistance mécanique à température ambiante et à chaud (après 30 mn à 250°C), on a réalisé une série d'éprouvettes de 120 mm de longueur et de 10 mm d'épaisseur, soumises à un test de traction à l'aide d'une machine de traction INSTRON INSTRUMENTS, pour mesurer la résistance à la rupture R et le module d'élasticité.

Les résultats sont les suivants:

| | 20°C | | 250°C | |
|---|---|---|---|---|
| grains | nus | traités | nus | traités |
| R (MPa) | 70,3 | 82,8 | 43,4 | 46,2 |
| E (GPa) | 42,0 | 44,9 | 19,0 | 24,0 |

On constate une amélioration générale pour les grains traités, en particulier une augmentation de 25% du module d'élasticité à chaud.

Pour évaluer l'influence du traitement des grains sur les propriétés abrasives de ces meules utilisées pour le décriquage des aciers, on a réalisé des essais de meulage à froid sur un acier inoxydable ferritique à 17% de chrome, et à chaud sur un acier inoxydable austénitique à 18% de chrome et 10% de nickel, dans les conditions suivantes:
- pression sur la meule: 1 tonne
- angle de meulage: 70°
- vitesse de meulage: 80 m/s.

Les résultats sont les suivants en kg de métal enlevés par meule

| | ferritique | austénitique |
|---|---|---|
| grains non traités | 1100 | 2500 |
| grains traités | 1500 | 2800 |

On constate une amélioration significative du rendement de la meule utilisant les grains enrobés, d'autant plus nette que la température de travail est élevée.

## Revendications

1. Grain abrasif à base d'alumine, caractérisé en ce qu'il présente une peau, représentant de 0,1 à 5% en poids du grain, constituée essentiellement d'un mélange d'hydrate d'alumine issu d'une solution colloïdale pour 5 à 95% de son poids, et de silicate de sodium, pour 5 à 95% de son poids.

2. Grain abrasif selon la revendication 1, caractérisé en ce qu'il est en corindon brun ou blanc électrofondu.

3. Grain abrasif selon la revendication 1, caractérisé en ce qu'il est en bauxite ou alumine frittée.

4. Toile ou papier abrasif réalisé par dépôt de grains selon l'une des revendications 1 à 3 sur une toile ou un papier préencollé.

5. Meule abrasive réalisée par incorporation de grains selon l'une des revendications 1 à 3 dans une résine.

6. Procédé de traitement de grains abrasifs consistant à:
- préparer un gel par mélange d'une solution de silicate de sodium et d'une solution colloïdale d'hydrate d'alumine en milieu acide,
- enrober les grains abrasifs à l'aide de ce gel en quantité comprise entre 0,1 et 5% de leur poids,
- soumettre les grains enrobés à un séchage entre 100 et 500°C.

7. Procédé selon la revendication 6, caractérisé en ce que l'hydrate d'alumine est un monohydrate sous forme de boehmite.

8. Procédé selon l'une des revendications 6 ou 7, caractérisé en ce que la solution acide contient de 0,5 à 30% en poids d'acide nitrique, acétique ou perchlorique.

## Patentansprüche

1. Schleifkorn auf Basis von Aluminiumoxid, dadurch gekennzeichnet, daß es eine Haut mit einem Kornmassenanteil von 0,1 bis 5 % aufweist, die im wesentlichen aus einem Gemisch besteht, das sich zu 5 bis 95 % ihrer Masse aus Tonerdehydrat, welches aus einer kolloidalen Lösung gewonnen wird, und zu 5 bis 95 % ihrer Masse aus Natriumsilikat zusammensetzt.

2. Schleifkorn nach Anspruch 1, dadurch gekennzeichnet, daß es aus elektrisch geschmolzenem braunen oder weißen Korund ist.

3. Schleifkorn nach Anspruch 1, dadurch gekennzeichnet, daß es aus gesintertem Bauxit oder Aluminiumoxid ist.

4. Schleifleinen oder -papier, das durch Ablagerung von Körnern nach einem der Ansprüche 1 bis 3 auf einem vorgeleimten Leinen oder Papier hergestellt wird.

5. Schleifscheibe, die durch Beimengen von Kömem nach einem der Ansprüche 1 bis 3 in ein Harz hergestellt wird.

6. Verfahren zur Behandlung von Schleifkörnern,
- bei dem ein Gel durch Mischen einer Natriumsilikatlösung und einer kolloidalen Lösung aus Tonerdehydrat in einem sauren Medium zubereitet wird,
- bei dem die Schleifkörner mit diesem Gel in einer Menge von 0,1 bis 5 % ihrer Masse umhüllt werden,
- bei dem die umhüllten Körner bei 100 bis 500°C getrocknet werden.

7. Verfahren nach Anspruch 6, dadurch gekennzeichnet, daß das Tonerdehydrat ein Monohydrat in Form von Böhmit ist.

8. Verfahren nach einem der Ansprüche 6 oder 7, dadurch gekennzeichnet, daß die saure Lösung 0,5 bis 30 Masse-% Salpeter-, Essig- oder Perchlorsäure enthält.

## Claims

1. An alumina-based abrasive grain, characterised in that it has a skin which is essentially constituted by a mixture of aluminium hydrate coming from a colloidal solution for 5 to 95 % of its weight and of sodium silicate for 5 to 95 % of its weight.

2. An abrasive grain according to claim 1 characterised in that it is composed of electromolten brown or white corundum.

3. An abrasive grain according to claim 1, characterised in that it is composed of sintered bauxite or alumina.

4. A cloth or abrasive paper formed by deposition of grains according ot one of claims 1 to 3 on a cloth or a pre-coated paper.

5. A grinding wheel produced by incorporating grains according to one of claims 1 to 3 in a resin.

6. A process for the treatment of abrasive grains, consisting in :
- preparing a gel by mixing a solution of sodium silicate and a colloidal solution of aluminium hydrate in an acid medium,
- coating the abrasive grains with between 0.1 and 5 % of their weight of that gel,
- subjecting the coated grains to a drying treatment at between 100 and 500°C.

7. A process according to claim 6 characterised in that the aluminium hydrate is a monohydrate in boehmite form.

8. A process according to either claim 6 or claim 7, characterised in that the acid solution contains from 0.5 to 30 % by weight of nitric, acetic or perchloric acid.
